Europäisches Patentamt

European Patent Office

Office européen des brevets

(11) Veröffentlichungsnummer: **0 348 587**

**A2**

(12) **EUROPÄISCHE PATENTANMELDUNG**

(21) Anmeldenummer: 89100572.0

(22) Anmeldetag: 13.01.89

(51) Int. Cl.4: **H02H 3/24**

(30) Priorität: 30.06.88 DE 3822021

(43) Veröffentlichungstag der Anmeldung:
03.01.90 Patentblatt 90/01

(84) Benannte Vertragsstaaten:
AT DE ES FR GB IT NL SE

(71) Anmelder: **AUERGESELLSCHAFT GMBH**
**Thiemannstrasse 1**
**D-1000 Berlin 44(DE)**

(72) Erfinder: **Kämmer, Peter**
**Pillnitzer Weg 35**
**D-1000 Berlin 20(DE)**

(54) Schaltungsanordnung zur Überwachung eines aus einem integrierten Schaltkreis aufgebauten elektronischen Gerätes gegen Betriebsstörungen.

(57) Die Erfindung betrifft eine Schaltungsanordnung zur Überwachung eines aus einem integrierten Schaltkreis aufgebauten elektronischen Gerätes (3) gegen Betriebsstörungen, welches aus einem wiederaufladbaren Akkumulator (1) betrieben wird. Hierbei ist es erforderlich, daß bei einer Unterschreitung einer vorgegebenen Betriebsspannung für das zu versorgende elektronische Gerät, dieses vom Akkumulator (1) abgetrennt wird. Eine derartige Abtrennung soll nicht nur beim Vorliegen einer erreichten Tiefentladespannung des Akkumulators (1), sondern auch im Hinblick auf Kurz- und/oder Kriechschlüsse und auf einen Mindestspannungspegels der Betriebsspannung erfolgen.

Die Erfindung löst diese Aufgabe dadurch, daß die Überwachungseinrichtung (2) einen als Komparator geschalteten Operationsverstärker (4) aufweist, der mit seinem Ausgang an ein Halbleiterschaltelement (10) angeschlossen ist, welches wiederum zwischen dem Akkumulator (1) und dem elektronischen Gerät (3) in Reihe geschaltet ist, wobei zwischen dem Gerät (3) und dem Halbleiterschaltelement (10) in Sperrichtung zum Gerät (3) eine Diode (11) an den invertierenden Eingang des Operationsverstärkers (4) geschaltet ist.

Fig. 1

# Schaltungsanordnung zur Überwachung eines aus einem integrierten Schaltkreis aufgebauten elektronischen Gerätes gegen Betriebsstörungen

Die Erfindung betrifft eine Schaltungsanordnung zur Überwachung eines aus integrierten Schaltkreisen aufgebauten elektronischen Gerätes gegen Betriebsstörungen nach dem Oberbegriff des Anspruchs 1.

Bei aus integrierten Schaltkreisen aufgebauten elektronischen Geräten, die aus wiederaufladbaren Akkumulatoren betrieben werden, ist es erforderlich, daß einerseits der Akkumulator gegen Tiefentladung geschützt und andererseits die Betriebsspannung zur Versorgung der integrierten Schaltkreise überwacht werden muß, um ein einwandfreies Arbeiten der logischen und analogen Bauelemente zu gewährleisten. Für beide Fälle muß deshalb bei durch Störungen verursachtem Spannungsabfall oder Spannungserhöhung der Betrieb bzw. die Betriebsspannung des Gerätes sicher abgeschaltet werden können. Bei einem aus wiederaufladbaren Akkumulatoren betriebenen elektronischen Gerät ist eine Schutzanordnung für den Akkumulator gegen Tiefentladung bekannt, bei der bei Erreichen einer vorgegebenen, untersten Endladeschluß-Spannung das zu versorgende Gerät mittels eines von einer Überwachungseinrichtung gesteuerten Halbleiter-Schaltelementes vom Akkumulator abgetrennt wird (DE-OS 27 32 794).

Die Überwachungseinrichtung selbst kann keine weiteren Überwachungsfunktionen für die integrierten Schaltkreise des Gerätes übernehmen, wenn es beispielsweise auch darum geht, daß die Betriebsspannung für das Gerät im Hinblick auf Kurz-und/oder Kriechschlüsse und auf einen sogenannten Mindestspannungspegel hin überwacht werden soll, der zum einwandfreien Betreiben der logischen und analogen Bauelemente erforderlich ist. Hierfür wären zusätzliche aufwendige schaltungstechnische Maßnahmen vorzunehmen.

Der Erfindung liegt die Aufgabe zugrunde, eine Schaltungsanordnung zur Überwachung eines aus integrierten Schaltkreisen aufgebauten und mit einem Akkumulator betriebenen elektronischen Geräts so zu gestalten, daß die Überwachung sowohl des Akkumulators gegen Tiefentladung als auch der Betriebsspannung mit nur einer Überwachungseinrichtung erreicht wird.

Diese Aufgabe wird bei einer gattungsgemäßen Schaltungsanordnung durch die kennzeichnenden Merkmale des Anspruchs 1 gelöst.

Die mit der Erfindung erzielten Vorteile bestehen insbesondere darin, daß die vorgeschlagene Überwachungseinrichtung außer der Überwachung des Akkumulators gegen Tiefentladung zusätzliche Überwachungsfunktionen für die Betriebsspannung des Gerätes mit geringem schaltungstechnischem Aufwand ausführen kann.

Die Erfindung wird im folgenden an den in der Zeichnung dargestellten Ausführungsbeispielen näher erläutert.

Es zeigen

Fig. 1 eine Schaltungsanordnung, bei der gemäß der Erfindung die Überwachung gegen Tiefentladung eines Akkumulators und die Überwachung der Betriebsspannung für ein elektronisches Gerät mit nur einer Überwachungsgruppe erreicht wird, und

Fig. 2 eine Schaltungsanordnung nach Fig. 1, bei der die Einschaltung der Überwachungsbaugruppe über einen positiven Pol erfolgt.

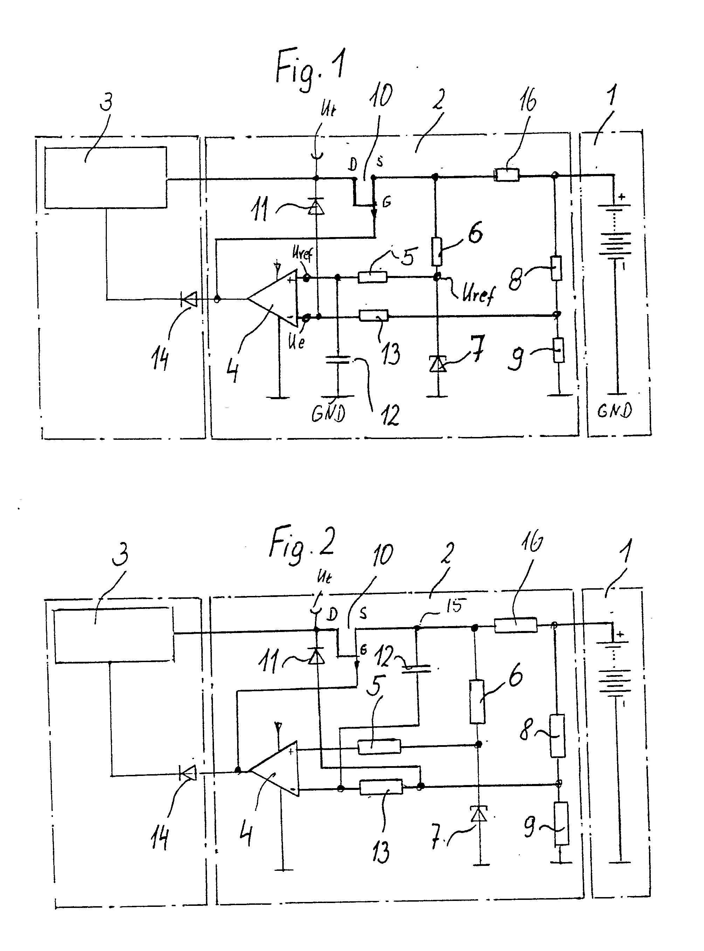

Wie aus Fig 1 ersichtlich ist, besteht die Schaltungsanordnung im wesentlichen aus einem Akkumulator-Block 1, einer Überwachungseinrichtung 2 und einem elektronischen Gerät 3.

Die Überwachungseinrichtung 2 weist einen als Komparator 4 geschalteten Operationsverstärker auf, an dessen nichtinvertierenden Eingang (Plus-Eingang) über einen Widerstand 5 eine Referenzspannung Uref anliegt, die durch einen ersten Spannungsteiler 6,7 erzeugt wird. Parallel zu diesem ersten Spannungsteiler und zum Akkumulator 1 ist ein zweiter Spannungsteiler 8,9 geschaltet, durch den der vom Hersteller des Akkumulators 1 vorgegebene Tiefentlade-Grenzwert eingestellt ist. Zur Überwachungseinrichtung 2 gehört weiterhin ein Feldeffekttransistor 10 (FET), der mit dem Akkumulator 1 und mit dem Ausgang des Komparators 4 sowie mit dem elektronischen Gerät 3 verbunden ist.

Der Feldeffekttransistor 10 bildet quasi das von der Überwachungseinrichtung 2 gesteuerte zentrale Schaltelement zum Abschalten der Betriebsspannung für das elektronische Gerät 3 vom Akkumulator 1, wenn die bereits genannten Betriebsstörungen eintreten sollten. Zwischen dem FET 10 und dem Komparator 4 ist in Sperrichtung eine Diode 11 parallel geschaltet, so daß im Betriebsfall kein Strom an den invertierenden Eingang (Minus-Eingang) des Komparators 4 gelangt.

Parallel zum Komparator 4 ist an dessen nichtinvertierenden Eingang ein Kondensator 12 geschaltet, der mit dem im Abgreifzweig des ersten Spannungsteilers 6,7 geschalteten Widerstand 5 ein RC-Glied bildet, welches eine Einschaltverzögerungs-Funktion erfüllt. Die Einschaltverzögerung ermöglicht ein definiertes Einschalten der Überwachungseinrichtung 2 mit einem in der Schaltungsanordnung nicht näher dargestellten Schalter.

Im Abgreifzweig des zweiten Spannungsteilers 8,9 ist ein Widerstand 13 an den invertierenden Eingang des Komparators 4 gesschaltet.

Am Ausgang des Komparators 4 ist eine mit dem integrierten Schaltkreis des elektronischen Gerätes 3 verbundene Diode 14 geschaltet, die als Koppeldiode dient und über die eine weitere Abschaltung der Betriebsspannung im Störfall erfolgen kann oder aber es kann über diese Diode eine Fehlermeldung ausgegeben werden.

In Fig. 2 ist eine im Aufbau im wesentlichen mit der in Fig. 1 dargestellten Schaltungsanordnung gleiche Ausführung dargestellt, bei der die Einschaltung der Überwachungseinrichtung jedoch über einen positiven Pol erfolgt. Dies ist immer dann vorteilhaft, wenn eine andere Stromversorgungsquelle vorhanden ist und diese Einschaltungsart bevorzugt wird. Wie aus Fig. 2 ersichtlich ist, ist für diesen Fall der Kondensator 4 an einen positiven Pol 15 der Schaltung angeschaltet.

Die Wirkungsweise der erfindungsgemäßen Schaltungsanordnung nach den Figuren 1 und 2 ist folgende:

Mit der Schaltungsanordnung werden von der Überwachungseinrichtung 2 Schaltfunktionen erfüllt, und zwar die Einschaltfunktion mit Einschaltverzögerung, die Schutzfunktion für den Akkumulator 1 gegen Tiefentladung, die Überwachungsfunktion für die Bestriebsspannung im Falle eines Kurz- und/oder Kriechschlusses und die Überwachungsfunktion im Hinblick eines Minimal-Spannungspegels der Betriebsspannung, sowie die Überwachungsfunktion für die erforderliche Temperaturbegrenzung des Feldeffekttransistors 10. Immer dann, wenn die vorgenannten Störfälle eintreten sollten, wird von der Überwachungseinrichtung 2 die Bestriebsspannung vom Akkumulator 1 abgeschaltet.

Nach dem Einschalten des elektronischen Gerätes 3 in Fig. 1 fließt der Akkumulatorstrom vom Pluspol durch die Strombegrenzungswiderstände 16, 6 und 5 sowie durch den Kondensator 12 zum Minuspol GND. Der nicht invertierende Eingang des Komparators 4 wird somit direkt gegen Messe gezogen, so daß an diesem Eingang ein negatives Eingangssignal anliegt, das bewirkt, daß am Ausgang ein Low-Signal ansteht. Das Low-Signal steuert das Gate G des Feldeffekttransistors 10 an und bewirkt keinen Einfluß auf den vorliegenden Schaltzustand des Transistors. Der Transistor 10 wird durchgeschaltet, wenn die erforderliche Betriebsspannung Ut konstant ist, die Tiefentladeschwelle des Akkumulators nicht erreicht ist, kein Kurzschluß vorliegt und die Bestriebsspannung Ut durch einen Kriechschluß nicht unterhalb des eingestellten Schwellenwertes der Referenzspannung Uref liegt. Die Zeit der Einschaltverzögerung wird durch das RC-Glied 5, 12 bestimmt.

Die Schaltungsanordnung zum Schutz des Akkumulators 1 gegen Tiefentladung besteht aus dem als Komparator 4 geschalteten Operationsverstärker, den Spannungsteilern 6, 7 und 8, 9, der Diode 11 sowie dem Transistor 10. Die Überwachung der Tiefentladung erfolgt derart, daß der vom Akkumulator-Hersteller angegebene Tiefentladegrenzwert, gebildet durch den Spannungsteiler 8, 9, mit dem Wert der Referenzspannung Uref mittels des Komparators 4 verglichen wird. Die Referenzspannung Uref wird über den Begrenzungswiderstand 6 mit der Referenzdiode 7 gebildet. Die Referenzspannung Uref dient als direkte Bezugsspannung für den Komparator 4.

Wenn die heruntergeteile Akku-Spannung den Wert der Referenzspannung Uref unterschreitet, steht am invertierenden Eingang des Komparators 4 ein Low-Signal an, welches am Ausgang als High-Signal erscheint und damit den Transistor 10 sperrt, was gleichbedeutend ist, daß die Betriebsspannung Ut abgeschaltet wird. Die Diode 11 hält hierbei den Komparator 4 in Selbsthaltung. Dieser Schaltungszustand kann nur durch erneutes Einschalten nach Beseitigung der Fehlerursache aufgehoben werden.

Die Schaltungsanordnung zur Kurzschlußüberwachung besteht im wesentlichen aus der an den invertierenden Eingang des Komparators 4 parallel geschalteten Diode 11. Bei einem direkten Kurzschluß wird die Betriebsspannung Ut nach dem Minus-Potential (GND-Potential) gezogen. Die Diode 11 schaltet den invertierenden Eingang des Komparators 4 ebenfalls nach dem Minus-Potential durch.

Der Ausgang des Komparators 4 nimmt ein High-Signal an und sperrt den FET-Transistor 10, was bedeutet, daß der Komparator die Betriebsspannung Ut durch den Transistor abschaltet. Der Komparator 4 hält sich über die Diode 11 selbst. Dieser Schaltungszustand kann ebenfalls nur durch erneutes Einschalten nach Beseitigung der Fehlerursache aufgehoben werden. Die Einschaltung erfolgt wie bereits beschrieben.

Die Überwachung des Mindest-Spannungspegels der Betriebsspannung Ut erfolgt ebenfalls durch die Schaltungsanordnung der Überwachungseinrichtung 2. Dieser Mindest-Spannungspegel ist ein von den Herstellern von integrierten Schaltkreisen vorgegebener Spannungswert, der erforderlich ist, um ein einwandfreies Arbeiten der Logik-Bausteine zu gewährleisten.

Auch dieser Mindest-Spannungswert der Bestriebsspannung Ut ist abhängig von der Referenzspannung Uref, die dann entsprechend ausgewählt bzw. vorgegeben werden muß. Die Abschaltung der Betriebsspannung Ut beim Unterschreiten der Mindestspannung erfolgt wie bei der beschriebenen Tiefentladungsüberwachung des Akkumulators 1 und der Kurzschlußüberwachung.

Für den Fall, daß in den von der Betriebsspannung Ut versorgten integrierten Schaltkreisen ein Kriechschluß auftritt, der den Spannungspegel der Betriebsspannung Ut sinken läßt, kann die Betriebsspannung ebenfalls durch die Schaltungsanordnung der Überwachungseinrichtung 2 abgeschaltet werden. Die erforderliche Schaltschwelle hierfür kann durch entsprechende Dimensionierung der Referenzspannung Uref festgelegt werden.

Weiterhin kann durch entsprechende Auslegung der Referenzspannung im Störungsfall die Verlustleistung des Feldeffekttransistors 10 derart begrenzt werden, daß jeweils die den Anforderungen entsprechende festgelegte Temperaturgrenze nicht überschritten wird. Insofern handelt es sich hierbei um einen thermischen Schutz für den Transistor 10. Die Abschaltung der Betriebsspannung beim Überschreiten der Temperaturgrenze erfolgt wie bereits bei den anderen Überwachungsvorgängen beschrieben wurde.

Aus dem Vorstehenden wird deutlich, daß die den Komparator 4 steuernde Referenzspannung Uref unter anderem mit ein wesentliches Merkmal der Erfindung ist, wenn es darum geht, eine Vielzahl von Überwachungsfunktionen durch lediglich eine Überwachungseinrichtung durchführen zu lassen. Die Referenzspannung Uref muß so dimensioniert und mit der Überwachungseinrichtung 2 abgestimmt sein, daß mit dieser Referenzspannung der am Ausgang des Komparators 4 liegende Schalttransistor FET 10 immer dann die Bestriebsspannung des elektronischen Gerätes 3 abschaltet, wenn Tiefentladung des Akkumulators 1, Kurz- und/oder Kriechschluß, Mindest-Spannungspegel der Betriebsspannung und Überschreitung der Temperaturgrenze für den Feldeffekttransistor 10 vorliegt.

Als Spannungsquelle für diese Referenzspannung Uref können beispielsweise vorteilhaft in einer anderen, in der Zeichnung nicht näher dargestellten Ausführung der Schaltungsanordnung externe Referenzquellen, regelbare Referenzdioden, Zenerdioden und Transistoren sowie integrierte Schaltkreise dienen. Nachfolgend werden die Schaltfunktionen der Schaltungsanordnung nach Fig. 2 beschrieben. Nach dem Anlegen der Akkumulatorspannung wird durch den Kondensator 12 ein positiver Impuls auf den invertierenden Eingang des als Komparator 4 geschalteten Operationsverstärkers gekoppelt. Dieser Impuls bewirkt eine Einschaltverzögerung der Überwachungseinrichtung 2, indem der Ausgang des Komparators 4 für die Zeit der Impulsdauer auf einen Low-Pegel gehalten wird.

Wenn keine Störung vorliegt, bleibt nach dem Impulsende der Komparatorausgang auf Low-Pegel und schaltet mit dem Feldeffekttransistor 10 die Akkumulatorspannung durch. Die Impulsdauer und Impulsbreite wird durch den Kondensator 12 und durch den Widerstand 13 bestimmt.

Bei einer vorliegenden Störung wird am Ausgang des Komparators 4 ein High-Pegel erzeugt, so daß der Transistor 10 die Akkumulatorspannung sperrt. Der Komparator 4 hält sich über die Diode 11 selbst in dieser stabilen Lage.

Die weiteren Wirkungsweisen der Schaltungsanordnung erfolgen wie bereits bei den vorhergehenden Überwachungsvorgängen beschrieben wurde.

**Ansprüche**

1. Schaltungsanordnung zur Überwachung eines aus einem integrierten Schaltkreis aufgebauten elektronischen Gerätes (3) gegen Betriebsstörungen, welches aus einem wiederaufladbaren Akkumulator (1) betrieben wird, bestehend aus von einer Überwachungseinrichtung (2) mittels Spannungsteiler-Spannungen gesteuerten Halbleiterschaltelementen, die bei einer Unterschreitung einer vorgegebenen Betriebsspannung für das zu versorgende elektronische Gerät (3), dieses vom Akkumulator (1) abtrennt, dadurch gekennzeichnet, daß

a) das eine Halbleiterschaltelement der Überwachungseinrichtung (2) ein als Komparator geschalteter Operationsverstärker (4) ist, der mit seinem Ausgang an das andere Halbleiterschaltelement (10) angeschlossen ist, welches wiederum zwischen dem Akkumulator (1) und dem elektronischen Gerät (3) in Reihe geschaltet ist, und

b) zwischen dem elektronischen Gerät (3) und dem Halbleiterschaltelement (10) in Sperrichtung zum elektronischen Gerät eine Diode (11) an den invertierenden Eingang des Operationsverstärkers (4) geschaltet ist, die diesen selbsthaltend macht und bei einem Unterschreiten der erforderlichen Betriebsspannung, den invertierenden Eingang des Verstärkers auf ein Minus-Potential (GND) durchschaltet, so daß über den Verstärker das Halbleiterschaltelement (10) gesperrt ist.

2. Schaltungsanordnung nach Anspruch 1, dadurch gekennzeichnet, daß die den Operationsverstärker (4) steuernde und durch einen Spannungsteiler (6,7) erzeugte Referenzspannung (Uref) derart ausgelegt und mit der Überwachungseinrichtung (2) abgestimmt ist, daß die gewählte Referenzspannung als Bezugsspannung für den Operationsverstärker eine gemeinsame Schaltschwelle aufweist, die beim Auftreten von die Betriebsspannung beeinflussenden unterschiedlichsten Störfaktoren schaltet, so daß das Halbleiterschaltelement (10) gesperrt wird.

3. Schaltungsanordnung nach den Ansprüchen 1 und 2, dadurch gekennzeichnet, daß das Halbleiterschaltelement (10) ein Feldeffekttransistor (FET) ist.

4. Schaltungsanordnung nach den Ansprüchen 1 bis 3, dadurch gekennzeichnet, daß parallel zum Operationsverstärker (4) an dessen nichtinvertierenden Eingang ein Kondensator (12) geschaltet ist, der mit einem im Abgreifzweig des ersten Spannungsteilers (6,7) geschalteten Widerstand (5) ein RC-Glied bildet, das eine Einschaltverzögerungsfunktion erfüllt.

5. Schaltungsanordnung nach den Ansprüchen 1 bis 4, dadurch gekennzeichnet, daß parallel zum ersten Spannungsteiler (6,7) und zum Akkumulator (1) ein zweiter Spannungsteiler (8,9) geschaltet ist, durch den ein vorgegebener Tiefentlade-Grenzwert des Akkumulators eingestellt ist.

6. Schaltungsanordnung nach den Ansprüchen 1 bis 5, dadurch gekennzeichnet, daß der eine Teilungswiderstand (7) des ersten Spannungsteiler (6,7) eine einstellbare Referenzdiode ist.

7. Schaltungsanordnung nach den Ansprüchen 1 bis 3 und 5, dadurch gekennzeichnet, daß der Kondensator (12) einerseits an den invertierenden Eingang des Operationsverstärkers (4) und andererseits an einen positiven Pol (15) der Schaltung geschaltet ist.

Fig. 1

Fig. 2